# FASCICULE DE BREVET EUROPEEN

(11) **EP 1 315 318 B1**
(45) Date de publication et mention de la délivrance du brevet: **09.08.2006**
(21) Numéro de dépôt: 02370054.5
(22) Date de dépôt: 27.11.2002
(51) Int. Cl.: H04B 10/08

(54) **Dispositif de contrôle d'un réseau de transmission de signaux optiques**
Vorrichtung zur Überwachung eines optischen Signalübertragungsnetzwerks
Device for monitoring an optical signal transmission network

(30) Priorité: 27.11.2001 BE 200100768
(43) Date de publication de la demande: 28.05.2003
(73) Titulaire: Multitel ASBL, 7000 Mons (BE); Faculté Polytechnique de Mons, 7000 Mons (BE)
(72) Inventeur: Defosse, Yves, 5170 Bois-de-Villers (BE); Moeyaert, Veronique, 7000 Mons (BE); Robette, Laurent, 7330 Saint-Ghislain (BE); Wuilpart, Marc, 1420 Braine l'Alleud (BE)
(74) Mandataire: Duthoit, Michel Georges André

(56) Documents cités:
- EP-A- 0 975 102
- US-A- 5 251 001
- US-B1- 6 269 204
- WUILMART L ET AL: "A PC-based method for the localisation and quantization of faults in passive tree-structured optical networks using the OTDR technique" LASERS AND ELECTRO-OPTICS SOCIETY ANNUAL MEETING, 1996. LEOS 96., IEEE BOSTON, MA, USA 18-19 NOV. 1996, NEW YORK, NY, USA,IEEE, US, 18 novembre 1996 (1996-11-18), pages 122-123, XP010204871 ISBN: 0-7803-3160-5

## Description

La présente invention concerne un dispositif de contrôle d'un réseau de transmission de signaux optiques.

L'invention se verra plus particulièrement adaptée à des contrôles de réseau de transmission de signaux optiques de type arborescent et particulièrement du type point à multipoint. Cela étant, ledit dispositif pourra également être utilisé pour d'autres réseaux de transmission de signaux optiques, et notamment point à point.

Une technique, couramment utilisée dans la surveillance des fibres optiques, est celle de la réflectrométrie optique dans le domaine temporel.

Cette technique de mesure consiste, à partir d'un équipement de mesure, à envoyer un signal optique sur une fibre optique et à réceptionner les signaux rétrodiffusés et réfléchis, lesdits signaux correspondant notamment à des pertes dues à des coupleurs ou des défauts sur la fibre.

Actuellement, différents dispositifs utilisent cette technique de réflectrométrie pour contrôler un réseau de transmission de signaux optiques. Ces différents dispositifs sont classables en trois catégories principales.

Dans une première catégorie, on utilise un équipement de mesure de type OTDR (OTDR correspondant à l'abréviation de l'expression anglaise « Optical Time Domain Reflectrometry, en français « Equipement de réflectrométrie optique dans le domaine temporel) associé à un commutateur, ledit commutateur permettant de sélectionner séparément des lignes de dérivation, lesdites lignes de dérivation étant chacune connectées à une ligne secondaire à contrôler.

Le dispositif consiste à sélectionner une ligne de dérivation pour étudier la ligne secondaire à laquelle elle est connectée, d'envoyer un signal de contrôle de longueur d'onde donnée sur cette ligne et d'étudier les réflexions.

Dans un système point à multipoint, il est parfois nécessaire d'utiliser un grand nombre de lignes de dérivation et également d'ajouter une ligne de dérivation à chaque ajout de lignes secondaires ce qui entraîne une maintenance coûteuse. Enfin, ce dispositif ne permet pas de contrôler la totalité de la ligne secondaire mais uniquement la partie de la ligne secondaire entre l'élément réflectif et le point de connexion entre la ligne dérivée et la ligne secondaire. De plus, ce dispositif nécessite l'utilisation d'un composant actif, à savoir le commutateur, ce qui pose de nombreux problèmes d'alimentation électrique et de commande.

Une seconde catégorie de dispositif consiste à utiliser un équipement de type OTDR mais accordable, c'est-à-dire pouvant s'accorder sur plusieurs longueurs d'ondes différentes. L'équipement OTDR est connecté à la ligne principale, et au bout de chaque ligne secondaire, on place des éléments réflectifs, chaque élément réflectif de chaque branche renvoyant des longueurs d'ondes différentes de manière à pouvoir renvoyer des signaux réfléchis et des pics de réflexion distinguables d'une ligne secondaire à une autre, et ainsi de pouvoir attribuer les défauts à chacune des lignes.

Cela étant, ce dispositif nécessite l'utilisation d'un OTDR accordable et un système de routage de longueurs d'ondes, ces dispositifs étant très complexes à utiliser, et pour ce qui est de l'OTDR accordable non commercialisé à ce jour. Enfin, ce type de dispositif nécessite, à l'installation de chaque nouvelle ligne secondaire supplémentaire, de nouveaux réglages, et nécessite l'installation sur la nouvelle ligne secondaire d'un élément réflectif renvoyant des longueurs d'ondes différentes de celles de l'ensemble des lignes secondaires déjà installées.

Une troisième catégorie de dispositif prévoit l'utilisation d'un équipement OTDR, connecté à la ligne principale du réseau de transmission de signaux optiques, ainsi que des éléments de réflexion, placés au niveau des extrémités de chaque ligne sur lesquelles on prévoit des éléments permettant d'allonger artificiellement la longueur de la ligne.

Le dispositif est configuré de manière à ce que chaque ligne secondaire présente une longueur optique différente, la différence de longueur entre les différentes lignes devant être supérieure à la résolution spatiale de l'équipement OTDR, de manière à pouvoir mesurer séparément chaque pic de réflexion sur chacune des lignes secondaires étudiées.

On connaît ainsi le document US-6.269.204. Ce document présente en outre au niveau des moyens de réflexion, des moyens pour générer un signal d'identification pour respectivement identifier chacune des sections des lignes secondaires à contrôler.

Cela étant, là encore ce troisième type de dispositif présente de nombreux inconvénients parmi lesquels : la nécessité à chaque installation de lignes de calculer le nombre d'éléments pour allonger artificiellement la longueur de la ligne et également la difficulté lors de la maintenance du réseau d'identifier une ligne secondaire sur la trace de l'équipement de mesure.

La présente invention a pour but de pallier les inconvénients précités et permet de contrôler un réseau de transmission de signaux optiques comportant une ligne principale et une multitude de lignes secondaires.

Un autre but de la présente invention est de proposer un dispositif de contrôle d'un réseau de transmission de signaux optiques qui soit aisé à mettre en oeuvre et dont la maintenance est simplifiée, par rapport aux systèmes existants, et peu onéreuse.

Un autre but de la présente invention est de proposer un dispositif de contrôle d'un réseau de transmission optique dans lequel chaque ligne secondaire peut être contrôlée séparément.

Un autre but de la présente invention est de proposer un dispositif de contrôle d'un réseau de transmission de signaux optiques dans lequel chaque défaut de chaque ligne secondaire peut être localisé précisément.

D'autres buts et avantages de la présente invention apparaîtront au cours de la description qui va suivre qui n'est donnée qu'à titre indicatif et qui n'a pas pour but de la limiter.

L'invention concerne un dispositif de contrôle d'un réseau de transmission de signaux optiques comportant une ligne principale, connectée à au moins deux lignes secondaires.

Selon l'invention, le dispositif comprend :
- un équipement de réflectrométrie optique dans le domaine temporel, dit OTDR, pour transmettre un signal de contrôle unique de longueur d'onde λ sur ledit réseau de transmission de signaux optiques, et pour réceptionner ainsi que mesurer les réflexions dudit signal de contrôle,
- des moyens de réflexion dudit signal de contrôle placés au niveau de l'extrémité de chacune desdites au moins deux lignes secondaires,
- des moyens de sélection, conçus pour l'actionnement des moyens de réflexion, placés au niveau des moyens de réflexion, pour soit actionner, soit atténuer ou stopper individuellement la réflexion de chacun desdits moyens de réflexion.

L'invention vise également un procédé mis en oeuvre à partir du dispositif tel que précité.

Elle sera mieux comprise à la lecture de la description suivante accompagnée des dessins en annexe qui en font partie intégrante et parmi lesquels :
- la figure 1 illustre, selon une vue schématique, un exemple de réalisation du dispositif de contrôle conforme à l'invention,
- la figure 2 illustre, selon une vue schématique, un premier exemple de réalisation du détail noté « i » de la figure 1,
- la figure 3 illustre, selon une vue schématique, un second exemple de réalisation du détail noté « i » de la figure 1,
- les figures 4 à 8 illustrent des exemples de mesures obtenues par le dispositif conforme à l'invention.

La présente invention est relative à un dispositif de contrôle d'un réseau de transmission de signaux optiques.

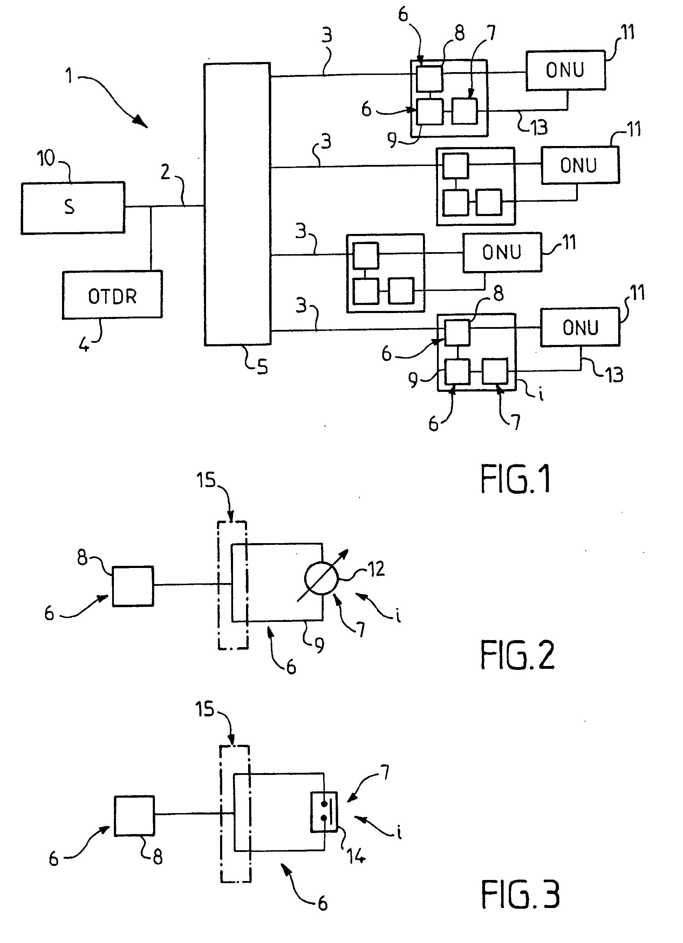

Comme représenté à la figure 1, en aval d'une source S de signaux de communication optiques, le réseau de transmission de signaux optiques de type arborescent comporte une ligne principale 2 connectée à au moins deux lignes secondaires 3. Le dispositif 1 de contrôle comprend un équipement 4 de réflectrométrie optique dans le domaine temporel, connu sous l'abréviation OTDR (Optical Time Domain Reflectrometry), pour transmettre un signal unique de longueur d'onde λ sur ledit réseau de transmission de signaux optiques.

Ledit équipement de type OTDR 4 permet également la réception et la mesure des réflexions dudit signal de contrôle.

Ledit signal de contrôle est injecté au niveau de la ligne principale 2, puis est transmis par l'intermédiaire d'un coupleur 5 au niveau de chacune des lignes secondaires 3, selon des techniques connues.

Le signal de contrôle est atténué en fonction des obstacles et des défauts sur chacune des lignes secondaires puis est réfléchi par des moyens de réflexion 6 dudit signal de contrôle.

Ces moyens de réflexion 6 sont placés avantageusement au niveau de l'extrémité de chacune desdites au moins deux lignes secondaires 3 de manière à pouvoir contrôler la quasi totalité de la ligne secondaire 3.

A titre d'exemple, il sera avantageux de placer lesdits moyens de réflexion 6 au niveau de l'unité de réseau optique (Optical Network Unit, en abrégé ONU) et particulièrement dans le cas où le dispositif de contrôle est destiné à la surveillance d'un réseau de transmission de signaux optiques de type FITL (Fiber Into The Loop), technologie qui se base sur le déploiement d'une couche physique optique capable de transmettre des services multimédia (données, voix, vidéo) à haut débit délivrés en des points géographiques plus ou moins proches des abonnés.

Ledit dispositif 1 de contrôle comporte en outre des moyens de sélection 7. Cesdits moyens de sélection 7 permettent soit d'actionner, soit d'atténuer ou stopper individuellement la réflexion de chacun desdits moyens de réflexion 6.

En se reportant plus particulièrement aux figures 2 et 3, on voit que lesdits moyens de réflexion 6 sont constitués d'un coupleur sélectif en longueur d'onde 8 et d'un élément réflectif 9.

Ledit coupleur sélectif 8 est destiné à dévier le signal de contrôle en direction de l'élément réflectif 9 tandis qu'il laisse passer les autres longueurs d'ondes et notamment les longueurs d'ondes de communication, entre la source S 10 du réseau de transmission et les différentes unités de réseau optique ONU 11 placées aux extrémités de chacune des lignes secondaires 3 et inversement (car signaux voie montante)

On choisira avantageusement un coupleur sélectif 8 notamment de type WDM (Wavelength Division Multiplexing). Toutefois, d'autres types de coupleurs sélectifs connus de l'homme de l'art pourraient également être employés.

Ledit élément réflectif 9 sera constitué avantageusement par une boucle optique connectée audit coupleur sélectif 8 par l'intermédiaire d'un coupleur optique non sélectif en longueur d'onde 15.

Cela étant, là encore d'autres types d'éléments réflectifs peuvent être envisagés par l'homme de l'art, et notamment on pourrait utiliser comme élément réflectif 9 une ligne optique reliée à une extrémité à un élément métallique et à l'autre extrémité audit coupleur sélectif 8.

Lesdits moyens de sélection 7 comprennent, dans un premier mode de réalisation représenté à la figure 2, un atténuateur optique variable 12, placé au niveau des moyens de réflexion 6 et des moyens de commande, non représentés dans les dessins annexés, pour régler l'atténuation du signal de contrôle et ainsi modifier l'intensité du signal réflectif.

Dans ce cas, par analogie avec un système à commutateur tel que décrit par la suite, l'état passant en « on » correspond à une atténuation minimale ce qui conduit à une forte réflexion du signal de contrôle. Dans l'état « off » ou absorbant, le signal de contrôle est fortement atténué dû à la grande valeur de l'atténuation. Dans cet état, aucun pic de réflexion n'est présent en bout de ligne secondaire 3.

Dans ce mode de réalisation, les moyens de commande envoient un signal de commande audit atténuateur optique variable 12. Ce signal de commande permet de commander séparément les atténuateurs 12 de chacune desdites lignes secondaires 3.

A titre d'exemple, ledit signal de commande pourra être émis par l'équipement de type OTDR 4 ou par ladite source 10 en direction des différentes unités de réseau optique ONU 11, chaque unité de réseau optique 11 comportant des moyens pour analyser le signal de commande et contrôler ledit atténuateur optique variable 12 par l'intermédiaire d'une ligne de commande 13.

Ledit signal de commande pourra avantageusement constituer un code, chacun des codes correspondant à un atténuateur 12 particulier.

En se reportant à la figure 3, lesdits moyens de sélection 7 comprennent un commutateur 14, représentant un second mode de réalisation, ledit commutateur 14 étant placé au niveau des moyens de réflexion 6.

A l'instar du premier exemple de réalisation des moyens de sélection 7, utilisant un atténuateur optique variable 12, ledit commutateur 14 est associé à des moyens de commande. De manière analogue au premier exemple de réalisation, lesdits moyens de commande utilisent un signal de commande permettant la commutation sélective de chacun desdits commutateurs 14 des différentes branches secondaires 3.

Dans ce second mode de réalisation, ledit commutateur 14 est soit en position « on », c'est-à-dire à l'état passant, soit en position « off », à l'état ouvert, pour respectivement soit transmettre le signal de contrôle, soit le stopper. Autrement dit, l'état « off » correspond à un état absorbant, et l'état « on » à un état réflectif.

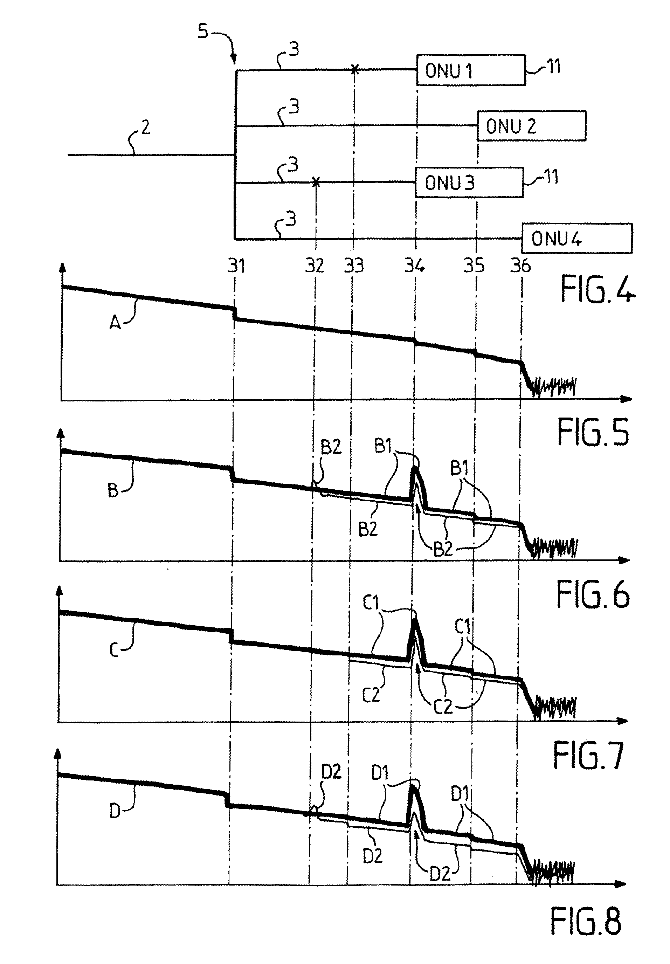

En se reportant aux figures 4 à 8, on va maintenant étudier différents cas de figures pouvant se produire dans un réseau point à multipoint. On prendra comme exemple le dispositif de la figure 4, schématisant un dispositif tel que représenté figure 1, c'est-à-dire un réseau comportant une ligne principale 2 connectée à quatre lignes secondaires 3, dont deux des lignes secondaires 3 ont la même longueur.

La figure 5 illustre un premier graphique « off », c'est-à-dire lorsque tous les éléments réflectifs du réseau présentent un état absorbant appelé « off ». Ce graphique correspond à une mesure OTDR des signaux de contrôle réfléchis.

On note une première perte au point 31, correspondant aux pertes dues au coupleur 5. On constate également de légères pertes apparaissant aux points 34 et 35, ces pertes correspondent à la fin de deux lignes secondaires 3 de longueurs différentes. Ce graphique A correspond à une mesure dans lequel aucun des éléments de réflexion 6 ne réfléchit le signal de contrôle, en effet, aucun pic de réflexion n'apparaît aux extrémités des branches secondaires 3.

La figure 6 représente le cas dans lequel lesdits moyens de sélection 7 ont actionné un des moyens de réflexion 6 pour le placer dans une position de réflexion du signal de contrôle dans la branche secondaire 3 relative à l'ONU 3.

Le graphique comporte deux courbes B1 et B2, la courbe B1 représente une situation de référence, idéalement le cas dans lequel la branche secondaire 3 contrôlée est sans défaut. La courbe B2 représente le cas où la branche secondaire 3 présente un défaut.

On constate en effet une perte au point 32 et également, conséquence de cette perte au point 32, une atténuation du pic de réflexion (au point 34) par rapport au pic de réflexion de référence.

En analysant le graphique B2, on en déduit ainsi que la ligne secondaire 3 contrôlée présente un défaut, et l'on peut localiser spatialement ce défaut au point 32 sur la trace fournie par l'équipement OTDR.

En se reportant à la figure 7, on voit le cas dans lequel la ligne secondaire 3 relative à l'ONU 3 est contrôlée en sélectionnant les moyens de réflexion de ladite ligne secondaire 3 et dans lequel la ligne contrôlée ne présente pas de défaut alors que le réseau comporte un défaut dans une branche secondaire 3 non contrôlée.

On voit en effet dans ce graphique C un défaut visualisé au point 33 ; cependant, contrairement à la figure 6, on voit que le pic de réflexion du graphe C2 correspond en amplitude au pic de réflexion du graphe C1, correspondant au pic de référence. Ceci permet de déduire, d'une part, qu'il existe un défaut dans le réseau, et d'autre part que ce défaut ne se situe pas sur la ligne secondaire 3 contrôlée.

La figure 8 représente un cas complexe dans lequel le réseau de transmission de signaux optiques comporte plusieurs défauts, dont au moins un défaut apparaissant sur la ligne contrôlée, puisque le pic de réflexion D2 a une amplitude inférieure au pic de réflexion D1, correspondant à la valeur de référence.

II est important de signaler qu'avantageusement la valeur de référence correspond à la valeur de chacune des lignes secondaires 3 relevée lors de leur installation.

L'analyse et le contrôle des différentes lignes secondaires reposent ainsi sur les mesures de réflectrométrie des différentes lignes secondaires 3.

Le procédé de contrôle mis en oeuvre dans le dispositif 1 consiste à réaliser les étapes suivantes :
- émission d'un signal de contrôle unique de longueur d'onde λ sur ledit réseau de transmission de signaux optiques,
- actionnement des moyens de réflexion 6 d'une ligne secondaire 3 à contrôler,
- réception et mesure des réflexions dudit signal de contrôle,
- comparaison de la valeur de la réflexion desdits moyens de réflexion 6 de la ligne secondaire 3 à contrôler avec une valeur de référence de manière à détecter un défaut éventuel sur ladite ligne secondaire 3 à contrôler,
- actionnement des moyens de réflexion 6 d'une autre ligne secondaire 3 à contrôler, et arrêt ou atténuation de la réflexion de la ligne secondaire 3 précédemment contrôlée.

Le procédé consiste également, lors de l'installation du réseau, à mesurer successivement la valeur de la réflexion desdits moyens de réflexion 6 de l'ensemble des lignes secondaires 3, la valeur obtenue pour chacune des lignes secondaires 3 constituant la valeur de référence de chacune des lignes secondaires 3.

Naturellement, d'autres modes de réalisation à la portée de l'homme de l'art, auraient pu être envisagés sans pour autant sortir du cadre de la présente demande telle que définie par les revendications ci-après.

## Revendications

1. Dispositif (1) de contrôle d'un réseau de transmission de signaux optiques comportant une ligne principale (2), connectée à au moins deux lignes secondaires (3), comprenant :
- un équipement de réflectrométrie optique dans le domaine temporel dit OTDR (4), pour transmettre un signal de contrôle unique de longueur d'onde λ sur ledit réseau de transmission de signaux optiques, et pour réceptionner ainsi que mesurer les réflexions dudit signal de contrôle,
- des moyens de réflexion (6) dudit signal de contrôle, placés au niveau de l'extrémité de chacune desdites au moins deux lignes secondaires (3),
**caractérisé en ce qu'**il comprend en outre des moyens de sélection (7) conçus pour l'actionnement des moyens de réflexion (6), placés au niveau desdits moyens de réflexion (6) pour soit actionner, soit atténuer ou stopper individuellement la réflexion de chacun desdits moyens de réflexion (6).

2. Dispositif selon la revendication 1, dans lequel lesdits moyens de réflexion (6) sont constitués d'un coupleur sélectif (8) et d'un élément réflectif (9), ledit coupleur sélectif (8) déviant le signal de contrôle en direction dudit élément réflectif (9).

3. Dispositif selon la revendication 2, dans lequel ledit coupleur sélectif (8) est constitué d'un coupleur de type WDM.

4. Dispositif de contrôle selon la revendication 2, dans lequel ledit élément réflectif (9) est constitué d'une boucle optique connectée audit coupleur sélectif (8), par l'intermédiaire d'un coupleur optique non sélectif en longueur d'onde (15).

5. Dispositif de contrôle selon l'une ou l'autre des revendications 2 et 3, dans lequel ledit élément réflectif (9) est constitué d'une ligne optique reliée à une extrémité à un élément métallique et à l'autre extrémité audit coupleur sélectif (8).

6. Dispositif de contrôle selon l'une quelconque des revendications 1 à 5, dans lequel lesdits moyens de sélection (7) comprennent un atténuateur optique variable (12), placé au niveau des moyens de réflexion (6) et des moyens de commande pour régler l'atténuation du signal de contrôle.

7. Dispositif de contrôle selon l'une quelconque des revendications 1 à 5 précédentes, dans lequel lesdits moyens de sélection (7) comprennent un commutateur (14) placé au niveau des moyens de réflexion (6) et des moyens de commande pour stopper ou transmettre ledit signal de contrôle.

8. Procédé de contrôle mis en oeuvre dans le dispositif (1) selon l'une quelconque des revendications 1 à 7 précédentes, dans lequel on réalise les étapes suivantes :
- émission d'un signal de contrôle unique de longueur d'onde λ sur ledit réseau de transmission de signaux optiques,
- actionnement des moyens de réflexion d'une ligne secondaire (3) à contrôler,
- réception et mesure des réflexions dudit signal de contrôle,
- comparaison entre la valeur de la réflexion desdits moyens de réflexion (6) de la ligne secondaire (3) à contrôler avec une valeur de référence de manière à détecter un défaut éventuel sur la ligne secondaire (3) contrôlée,
- actionnement des moyens de réflexion (6) d'une autre ligne secondaire (3) à contrôler et arrêt ou atténuation de la réflexion de ladite ligne secondaire (3) précédemment contrôlée.

9. Procédé selon la revendication 8, dans lequel on réalise, lors de l'installation du réseau de transmission de signaux optiques, la mesure successive de la valeur de la réflexion desdits moyens de réflexion (6) de l'ensemble des lignes secondaires (3), la valeur obtenue pour chacune des lignes secondaires (3) constituant la valeur de référence de chacune desdites lignes secondaires (3).

## Claims

1. A device (1) for controlling a transmission network of optical signals comprising a main line (2), connected to at least two secondary lines (3), including:
- a piece of optical reflectometry equipment in the so-called OTDR temporal domain (4), for transmitting a single control signal of wavelength λ over said transmission network of optical signals, and for receiving as well as measuring the reflections of said control signal,
- reflection means (6) of said control signal, located at the end of each of said at least two secondary lines (3),
**characterised in that** it comprises moreover selection means (7) designed for actuating reflection means (6), situated at said reflection means (6) either for actuating, or attenuating or stopping individually the reflection of each of said reflection means (6).

2. A device according to claim 1, wherein said reflection means (6) are composed of a selective coupler (8) and of a reflective element (9), said selective coupler (8) deviating the control signal towards said reflective element (9).

3. A device according to claim 2, wherein said selective coupler (8) is formed of a WDM type coupler.

4. A control device according to claim 2, wherein said reflective element (9) is formed of an optical loop connected to said selective coupler (8), via a non wavelength selective optical coupler (15).

5. A control device according to either of claims 2 and 3, wherein said reflective element (9) is formed of an optical line connected at one end to a metal element and at the other end to said selective coupler (8).

6. A control device according to any of the claims 1 to 5, wherein said selection means (7) include a variable optical attenuator (12), situated at the reflection means (6) and control means for adjusting the attenuation of the control signal.

7. A control device according to any of the previous claims 1 to 5, wherein said selection means (7) comprise a toggle switch (14) situated at the reflection means (6) and operating means for stopping or transmitting said control signal.

8. A control method implemented in the device (1) according to any of the previous claims 1 to 7, wherein the following steps are performed:
- transmission of a single control signal of wavelength λ over said transmission network of optical signals,
- actuation of the reflection means of secondary line (3) to be controlled,
- reception and measurement of the reflections of said control signal,
- comparison between the reflection value of said reflection means (6) of the secondary line (3) to be controlled and a reference value so as to detect a possible defect on the controlled secondary line (3),
- actuation of the reflection means (6) of another secondary line (3) to be controlled and stopping or attenuation of the reflection of said secondary line (3) controlled previously.

9. A method according to claim 8, wherein when installing the transmission network of optical signals, the following measurements are performed successively : the reflection value of said reflection means (6) of all the secondary lines (3), the value obtained for each of the secondary lines (3) forming the reference value of each of said secondary lines (3).

## Patentansprüche

1. Vorrichtung (1) zur Kontrolle eines Netzes für die Übertragung optischer Signale, das eine Hauptlinie (2) umfaßt, die an wenigstens zwei sekundären Linien (3) angeschlossen ist, umfassend :
- eine Ausstattung zur optischen Reflektrometrie im zeitlichen Bereich, die als OTDR (4) bezeichnet wird, um ein einmaliges Kontrollsignal mit der Wellenlänge λ in das besagte Netz zur Übertragung optischer Signale zu übertragen, und um die Rückstrahlungen des besagten Kontrollsignals zu empfangen sowie zu messen,
- Mittel zur Rückstrahlung (6) des besagten Kontrollsignals, die im Bereich des Endes von jeder der besagten wenigstens zwei sekundären Linien (3) befindlich sind, **dadurch gekennzeichnet, daß** sie außerdem Auswahlmittel (7) umfaßt, die für die Betätigung der Reflexionsmittel (6) geplant sind, die im Bereich der besagten Reflexionsmittel (6) befindlich sind, um die Rückstrahlung von jedem der besagten Reflexionsmittel (6) im einzelnen entweder zu betätigen oder abzuschwächen oder abzustellen.

2. Vorrichtung nach Anspruch 1, bei der die besagten Reflexionsmittel (6) durch einen selektiven Koppler (8) und ein rückstrahlendes Element (9) gebildet sind, wobei der besagte selektive Koppler (8) das Kontrollsignal in Richtung des rückstrahlenden Elements (9) ablenkt.

3. Vorrichtung nach Anspruch 2, bei der der besagte selektive Koppler (8) durch einen WDM-Koppler gebildet ist.

4. Kontrollvorrichtung nach Anspruch 2, bei der das besagte rückstrahlende Element (9) durch eine optische Steuerkette gebildet ist, die mit dem besagten selektiven Koppler (8) über einen optischen nicht selektiven Koppler (15) auf Wellenlänge verbunden ist.

5. Kontrollvorrichtung nach einem der Ansprüche 2 und 3, bei der das besagte rückstrahlende Element (9) durch eine optische Linie gebildet ist, die an einem Ende mit einem metallischen Element und an anderem Ende mit dem selektiven Koppler (8) verbunden ist.

6. Kontrollvorrichtung nach irgendeinem der Ansprüche 1 bis 5, bei der die besagten Auswahlmittel (7) ein variables optisches Dämpfungsglied (12) umfassen, das im Bereich der Reflexionsmittel (6) und der Steuermittel befindlich ist, um die Abschwächung des Kontrollsignals zu regulieren.

7. Kontrollvorrichtung nach irgendeinem der vorgehenden Ansprüche 1 bis 5, bei der die besagten Auswahlmittel (7) einen Umschalter (14) umfassen, der im Bereich der Reflexionsmittel (6) und der Steuermittel befindlich ist, um das besagte Kontrollsignal abzustellen oder zu übermitteln.

8. Kontrollverfahren, das in der Vorrichtung (1) nach irgendeinem der vorgehenden Ansprüche 1 bis 7 angewendet wird, bei dem die folgenden Schritte ausgeführt werden:
- Aussendung eines einmaligen Kontrollsignals mit der Wellenlänge λ in das besagte Netz zur Übertragung optischer Signale,
- Betätigung der Reflexionsmittel einer zu kontrollierenden sekundären Linie (3),
- Empfang und Messung der Rückstrahlungen des besagten Kontrollsignals,
- Vergleich zwischen dem Reflexionswert der besagten Reflexionsmittel (6) der zu kontrollierenden sekundären Linie (3) mit einem Bezugswert, derart, um einen möglichen Fehler auf der kontrollierten sekundären Linie (3) festzustellen,
- Betätigung der Reflexionsmittel (6) einer anderen zu kontrollierenden sekundären Linie (3) und Sperren oder Abschwächung der Rückstrahlung der besagten, vorher kontrollierten sekundären Linie (3).

9. Verfahren nach Anspruch 8, bei dem während der Installation des Netzes für die Übertragung optischer Signale die aufeinanderfolgende Messung des Reflexionswertes der besagten Reflexionsmittel (6) auf der Gesamtheit der sekundären Linien (3) ausgeführt wird, wobei der für jede der sekundären Linien (3) erhaltene Wert den Bezugswert von jeder der besagten sekundären Linien (3) darstellt.
